# EUROPÄISCHE PATENTSCHRIFT

(11) **EP 0 464 597 B1**
(45) Veröffentlichungstag und Bekanntmachung des Hinweises auf die Patenterteilung: **09.02.1994**
(21) Anmeldenummer: 91110472.7
(22) Anmeldetag: 25.06.1991
(51) Int. Cl.: F16F 13/00

(54) **Aktives hydraulisch dämpfendes Motorlager**
Active hydraulically damped engine mount
Support actif à amortissement hydraulique pour moteur

(30) Priorität: 02.07.1990 DE 4021039
(43) Veröffentlichungstag der Anmeldung: 08.01.1992
(73) Patentinhaber: METZELER GIMETALL AG, D-80992 München (DE)
(72) Erfinder: Härtel, Volker, Dr., W-8034 Germering (DE); Richter, Matthias, Dr., W-8084 Inning (DE); Stoppert, Michael, Dipl.-Ing., W-8000 München 60 (DE); Gugsch, Mathias, W-8000 München 40 (DE)
(74) Vertreter: Seibert, Hannelore

(56) Entgegenhaltungen:
- EP-A- 0 290 181
- DE-A- 3 419 437
- DE-A- 3 423 698
- PATENT ABSTRACTS OF JAPAN, Band 11, Nr. 64 (M-565)[2511], 26. Februar 1987;& JP-A-61 220 923 (MITSUBISHI ELECTRIC CORP.) 01-10-1986
- PATENT ABSTRACTS OF JAPAN, Band 11, Nr. 57 (M-564)[2504], 21. Februar 1987;& JP-A-61 218 428 (MITSUBISHI ELECTRIC CORP.) 27-09-1986
- PATENT ABSTRACTS OF JAPAN, Band 12, Nr. 64 (M-672)[2911], 26. Februar 1988;& JP-A-62 209 245 (MAZDA MOTOR CORP.) 14-09-1987
- PATENT ABSTRACTS OF JAPAN, Band 10, Nr. 346 (M-537)[2402], 21. November 1986;& JP-A-61 146 626 (MAZDA MOTOR CORP.) 04-07-1986
- A.T.Z., Band 85, Nr. 6, Juni 1983, Seiten 385-390; J. VAN DEN BOOM et al.:"Eine bessere Fahrzeugakustik durch Motorlager mit drehzahlgesteuertem Tilger"

## Beschreibung

Die Erfindung bezieht sich auf ein aktives, hydraulisch dämpfendes Motorlager, insbesondere für Kraftfahrzeuge, mit einer von einer gummielastischen Umfangswand umgebenen Arbeitskammer und einer Ausgleichskammer, die über einen Überströmkanal in einer Zwischenplatte miteinander in Verbindung stehen sowie mit einem Entkopplungssystem für hochfrequente Schwingungen, das in Abhängigkeit vorgegebener Betriebsparameter elektrodynamisch in Schwingungen versetzbar ist und aus einem Permanentmagneten und einer elektrischen Spule besteht, wobei die Spule mit einer Tilgermasse fest verbunden ist.

Ein solches Lager ist beispielsweise aus der DE-PS 34 19 437 bekannt. Dabei sind als Entkopplungssystem innerhalb einer gesonderten Membrankammer, die zur Arbeitkammer hin durch eine Membran, ggf. mit einer zusätzlichen Tilgermasse, abgeschlossen ist, konzentrisch und im Abstand zueinander ein Dauermagnet und eine elektrische Spule angeordnet, von denen eine von beiden mit der Membran fest verbunden ist. Damit ist es möglich, den dynamischen Druck in der Arbeitskammer des Lagers frequenz- und phasengesteuert zu der dynamischen Kraftbeaufschlagung des gesamten Systems so zu verändern, daß das Lager eine möglichst geringe Steifigkeit aufweist. Gegenüber passiven Entkopplungssystemen ist es darüber hinaus bei einem derartigen aktiven, elektrisch beeinflußten Entkopplungssystem möglich, nicht nur in einem schmalen Frequenzband, sondern über einen weiten Frequenzbereich von etwa 50 bis 300 Hz jeweils eine optimale akustische Abkopplung zu bewirken.

Die eigentliche Funktionsweise ist dabei so, daß die spulenbetätigte Gummimembran bei Schwingungseinleitung während Kompression der Arbeitskammer eine Bewegung dergestalt vornimmt, daß ein Flüssigkeitsvolumen, das möglichst genau so groß ist wie das durch die Kompression zu verdrängende, durch Auslenkung der Membran freigegeben wird, so daß in der Arbeitskammer eines solchen Lagers kein oder nur ein geringer Druckaufbau erfolgt. Das gleiche gilt für eine gegenläufige Bewegung. Wird die Arbeitskammer auf Zug beansprucht, so muß die spulenbetätigte Membran das Volumen der Arbeitskammer in einem solchen Maße verkleinern, daß in dieser kein oder nur ein geringer Druckaufbau entsteht.

Derartige Systeme sind inzwischen auch realisiert worden. Sie benötigen für eine spürbare Reduktion der dynamischen Steifigkeit auf etwa 1/3 bis 1/4 der entsprechenden Werte passiver, hydraulisch gedämpfter Lager gleicher Bauart eine Leistung von etwa 15 bis 30 Watt. Eine solche Leistung scheint auch die Obergrenze dessen zu sein, was bei üblichen Motorraumtemperaturen zusätzlich in einem solchen Motorlager dissipiert werden darf, da sich sonst das Lagerelement unzulässig stark erwärmt.

Ein Nachteil der beschriebenen Anordnung nach dem Stand der Technik ist die Tatsache, daß sich mit diesen angegebenen Leistungen im typischen Frequenzbereich zwischen 50 und 300 Hz nur überaus geringe Wechselkräfte erzeugen lassen. Diese reichen zwar aus, um im genannten Frequenzbereich durch periodische Veränderung des Kammervolumens Über- und Unterdruckspitzen abzubauen und damit die dynamische Verhärtung bei kleinen Amplituden deutlich zu verringern, sie sind aber nicht groß genug, um bei größeren Amplituden des Lagers die dabei auftretenden Druckschwankungen aufzufangen.

Bei niedrigen Frequenzen mit Amplituden von 0,5 bis 3,0 mm treten nämlich Druckschwankungen zwischen + 3 bar bei Druck und - 1 bar bei Zug auf. Diese Druckschwankungen erzeugen auf einer Membran mit einer typischen Fläche von ca. 10 cm² Wechselkräfte von etwa 100 N bei Zug und 300 N bei Druck, die mit einer solchen Anordnung nicht mehr abgefangen oder denen nicht mehr gegengesteuert werden kann.

Im normalen Fahrbetrieb treten an einem solchen Lager aber häufig beide Schwingungsmoden parallel auf, d.h. großhubige Relativbewegungen des Motors zur Karosserie im Bereich der Eigenfrequenz von 5 bis 10 Hz werden überlagert von Schwingbewegungen hoher Frequenz, die aus den Gas- und Massenkräften des Motors resultieren.

Damit kann ein solches bekanntes aktives Motorlager zwar das Übertragungsverhalten für hochfrequente Motorgeräusche verbessern, jedoch nicht, wenn gleichzeitig durch große Druckschwankungen mit niedriger Frequenz die Membran jeweils an die Anschläge gedrückt wird. Die Magnetspule mit ihren typischen Kräften im Bereich von 0,1 bis 2,0 N ist dann nicht in der Lage, die Membran von den Anschlägen abzuheben. Somit ist die hochfrequene Entkopplung immer nur in jenen kurzen Zeitbereichen wirksam, in denen der Druck in der Arbeitskammer etwa Atmosphärendruck entspricht, d.h. bei den Null-Durchgängen der niederfrequenten Schwingbewegungen. In über 90 % der Zeit wird bei einer solchen Beanspruchung die Membran an einem der Anschläge hängen und unfähig sein, kleine überlagerte Druckschwankungen höherer Frequenz auszugleichen.

Der vorliegenden Erfindung liegt daher die Aufgabe zugrunde, ein aktives Motorlager mit einem Entkopplungssystem zu schaffen, das unabhängig von hohen Flüssigkeitsdrücken im Lager eine sichere Entkopplung hochfrequenter Schwingungen bewirkt und das darüber hinaus bei einem Ausfall dieses Entkopplungssystems nicht die prinzipielle Funktionstüchtigkeit des Lagers als Dämpfungsglied für niedere Frequenzen in Frage stellt.

Zur Lösung dieser Aufgabe ist erfindungsgemäß vorgesehen, daß das Entkopplungssystem außerhalb der flüssigkeitsgefüllten Lagerräume auf der Karossierieseite des Lagers fest mit diesem verbunden ist.

Damit wird also mit dieser Entkopplung nicht versucht, das Übertragungsverhalten des Lagers durch periodische Erhöhungen oder Reduzierung des Druckes in der Arbeitskammer zu verändern, sondern in diesem Fall wird eine Magnetspule mit einer geeigneten Zusatzmasse benutzt, um direkt dynamische Wechselkräfte zu erzeugen, die den noch vom Lager übertragenen Wechselkräften entgegengerichtet sind.

Zweckmäßigerweise ist das Entkopplungssystem auf dem Boden eines die Ausgleichskammer umschließenden Lagertopfes angeordnet.

Das Entkopplungssystem selbst kann einen ringförmigen, am Lagertopf festgelegten Permanentmagneten aufweisen, der von einer elastischen Membran mit einer Tilgermasse und mit der an die Membran angekoppelten elektrischen Spule überspannt ist.

Die Tilgermasse kann dabei topfförmig ausgebildet und von der Spule umschlossen sein.

Zweckmäßigerweise beträgt das Gewicht der Tilgermasse etwa 5 bis 50 g.

In Weiterbildung der Erfindung ist zweckmäßigerweise zur Ansteuerung des Entkopplungssystems ein Sensor vorgesehen, der auch auf der Karosserieseite des Lagers angeordnet ist und bei über das Lager übertragenen Schwingungen oberhalb einer vorgesehenen Mindestfrequenz schwingungsproportionale, jedoch dazu phasenverschobene Signale an die Tilgerspule abgibt.

Zweckmäßigerweise besteht der Sensor aus einem seismischen System mit einer Masse und einer federbeaufschlagten Spule und gibt ein seiner Schwingbewegung angenähert proportionales Signal ab.

Die erforderliche Phasenverschiebung von etwa 180° zwischen Sensorspule und Tilgerspule kann auch auf mechanischem Wege dadurch erreicht werden, daß die Masse der Sensorspule in Zugrichtung und die Masse der Tilgerspule in Druckrichtung - jeweils bezogen auf den Permanentmagneten - angeordnet ist.

Anhand einer schematischen Zeichnung ist ein Ausführungsbeispiel nach der Erfindung näher erläutert.

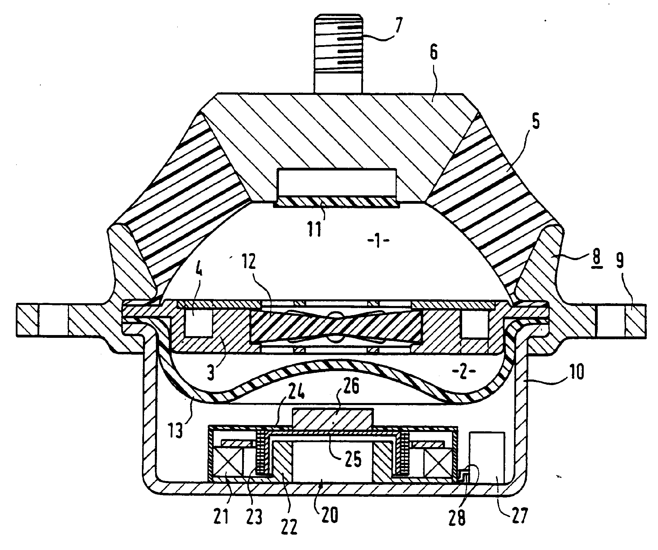

Dabei zeigt die einzige Figur einen Längsschnitt durch ein Lager mit einem entsprechenden Entkopplungssystem.

Wie man aus der Zeichnung ersieht, besteht ein solches hydraulisch dämpfendes Zweikammer-Motorlager im wesentlichen aus einer oberen Arbeitskammer 1 und einer unteren Ausgleichskammer 2, die mit einer hydraulischen Flüssigkeit gefüllt und durch eine Zwischenplatte 3 voneinander getrennt sind. In dieser Zwischenplatte 3 befindet sich eine kreisringförmige Überströmöffnung 4, die die beiden Kammern 1 und 2 hydraulisch miteinander verbindet und bei Schwingungen niederer Frequenz und größerer Amplitude eine Dämpfung durch Reibungsverluste der überströmenden Flüssigkeit bewirkt. Die Arbeitskammer 1 wird dabei von einer starkwandigen und hohlkegelförmigen Kammerwandung 5 - der sogenannten Tragfeder - aus gummielastischem Material umschlossen, die an der oberen Stirnseite von einer Motorlagerplatte 6 mit einem aufgesetzten Gewindebolzen 7 zum Anschluß an den nicht näher dargestellten Motor abgeschlossen und am unteren Außenumfang mit dem ringförmigen Widerlager 8 haftend verbunden ist, daß mit seinem umlaufenden Flansch 9 an der Fahrzeugkarosserie festgelegt ist. Die untere Ausgleichskammer 2 wird von einer beispielsweise tassenförmigen Kammerwandung 13 aus ebenfalls gummielastischem Material gebildet und ist ebenfalls am Widerlager 8 abdichtend befestigt. Zusätzlich ist unterseitig der Kammerwandung 13 noch ein topfförmiges Gehäuse 10 vorgesehen, das ebenfalls im Widerlager 8 verspannt ist und das auch einen Schutz der Ausgleichskammer 2 bewirken soll.

Zusätzlich sind bei dem dargestellten Ausführungsbeispiel angrenzend an die Arbeitskammer 1 eine Membran 11 in der Motorlagerplatte 6 und eine Entkopplungsmembran 12 in der Zwischenplatte 3 vorgesehen, mit denen hochfrequente Schwingungen zur Verbesserung des akustischen Übertragungsverhaltens entkoppelt werden sollen; durch die auftretenden Flüssigkeitsdrücke in der Arbeitskammer 1 ist deren Wirkung aber oftmals nur sehr beschränkt.

Um nun derartige hochfrequente Schwingungen unabhängig vom Flüssigkeitsdruck in der Lagerkammer entkoppeln zu können, ist ein zusätzliches Entkopplungssystem 20 außerhalb der flüssigkeitsgefüllten Lagerräume 1 und 2 und auf der Karosserieseite des Lagers vorgesehen. Im dargestellten Ausführungsbeispiel ist dieses Entkopplungssystem 20 auf dem Boden des Lagertopfes 10 angeordnet und fest mit diesem verbunden.

Dieses Entkopplungssystem 20 besteht aus einem ringförmigen Permanentmagneten 21 mit einem Weicheisenpfad 22, in dessen Spalt eine elektrische Spule 23 axial beweglich angeordnet ist, und zwar dadurch, daß sie am oberen Ende an eine den Permanentmagneten 21 überspannende elastische Membran 24 angekoppelt ist. Die Spule 23 umschließt dabei eine topfförmige Tilgermasse 25, die ebenfalls mit der Membran 24 verbunden ist und auf die zusätzlich noch eine weitere Tilgermasse 26 aufgesetzt ist. Diese Tilgermassen 25 und 26 sollen je nach Anforderung ein Gewicht von etwa 5 bis 50 g aufweisen.

Zur Ansteuerung dieses Entkopplungssystems 20 ist in unmittelbarer Nähe ein nur schematisch angedeuteter Sensor 27 vorgesehen, der an eine nicht näher dargestellte Stromversorgung angeschlossen und über die schematisch angedeuteten Verbindungsleitungen 28 mit der Spule 23 des Entkopplungssystems 20 verbunden ist. Dieser Sensor 27 weist ein nicht näher dargestelltes Filter auf, das nur hochfrequente Schwingungen von beispielsweise über 50 Hz auf der karosserieseitigen Lagerseite erfaßt und ein zu diesen Schwingbewegungen proportionales elektrisches Signal abgibt. Bei geeigneter Entkopplung und elektrischer oder auch mechanischer Phasenverschiebung und nach entsprechender Verstärkung kann dieses Signal direkt auf die massenbeaufschlagte Spule 23 gegeben werden, und zwar so, daß die auftretenden Restbeschleunigungen und Schwingbewegungen automatisch minimiert werden.

Dabei empfiehlt sich als Sensor 27 ein seismisches System, bestehend aus einer Masse und einer federbeaufschlagten Spule, die ein ihrer Schwinggeschwindigkeit in erster Näherung proportionales elektrisches Signal abgibt.

Für den vorliegenden Fall ist eine Phasenverschiebung von 180° zwischen der Schwingungserregung und der Tilgerspule 23 notwendig, um ein optimales Ergebnis zu erzielen. Diese erforderliche Phasenverschiebung läßt sich auf mechanischem Weg sehr einfach dadurch erreichen, daß nämlich die Masse auf der Sensorspule im Sensor 27 praktisch an der Spule hängend, also in Zugrichtung angebracht wird, während die Tilgermasse 25 bzw. 26 auf der Spule 23 nach oben gerichtet und somit in Druckrichtung angeordnet sind. Dadurch ergibt sich dann automatisch eine Signalverschiebung um 180°, die lediglich einer zwischengeschalteten Verstärkung bedarf, um das System zu optimieren.

Die wesentlichen Vorteile einer solchen Anordnung bestehen im folgenden:

Der konstruktive Aufbau ist sehr viel einfacher als bei bekannten Anordnungen, da hier das gesamte Stellglied in Form von Permanentmagnet 21 und Spule 23 nicht im Bereich der Flüssigkeit angeordnet sind und damit aufwendige elektrische Durchführungen, Halterungen usw. vermieden werden und darüber hinaus dieses System nicht gegen den Flüssigkeitsdruck arbeiten muß.

Durch die Anordnung des Entkopplungssystems außerhalb der flüssigkeitsgefüllten Lagerräume ist es möglich, im Lager selbst herkömmliche passive Entkopplungssysteme, wie die eingezeichneten Membranen 11 und 12, und ggf. ein entsprechendes Anschlagsystem zu verwenden, da dafür genügend Platz vorhanden ist.

Durch die Anordnung des Entkopplungssystems außerhalb des eigentlichen Lagers kann wegen einer besseren Wärmeabfuhr mit höheren Leistungen der Magnetspule gearbeitet werden, da hierbei die Wärme nicht im Bereich des hydraulischen Elementes bleibt. Zur Verbesserung der Wärmeabfuhr ist es dabei noch zusätzlich möglich, das gesamte Entkopplungssystem 20, d.h. den unteren Bereich des Lagertopfes 10, mit einer isolierenden Flüssigkeit auszufüllen, die die Funktionsfähigkeit des Entkopplungssystems in keiner Weise beeinträchtigt.

Ein derartiges Entkopplungssystem macht alle von der Karosserie herrührenden großhubigen Bewegungen mit, ohne daß es dabei die Fähigkeit einbüßt, hochfrequente Wechselkräfte zu erzeugen. Aus diesem Grunde ist es nicht nur während der Null-Durchgänge der niederfrequenten Schwingungen aktiv, sondern während der gesamten Zeit.

Schließlich weist die Anordnung noch ein günstiges Versagensverhalten auf, da bei einem Ausfall die Funktion des normalen passiven Lagerelements nicht beeinträchtigt wird.

Insgesamt wird also ein externes Entkopplungssystem verwendet, das nicht versucht, dynamische Druckschwankungen auszugleichen, sondern das eine dynamische Kraftentkopplung bei ganz bestimmten Frequenzen und über den gesamten Funktionsbereich des Lagers vornimmt.

## Patentansprüche

1. Aktives, hydraulisch dämpfendes Motorlager, insbesondere für Kraftfahrzeuge, mit einer von einer gummielastischen Umfangswand (5) umgebenen Arbeitskammer (1) und einer Ausgleichskammer (2), die über einen Überströmkanal (4) in einer Zwischenplatte (3) miteinander in Verbindung stehen, sowie mit einem Entkopplungssystem (20) für hochfrequente Schwingungen, das in Abhängigkeit vorgegebener Betriebsparameter elektrodynamisch in Schwingungen versetzbar ist und aus einem Permanentmagneten (21) und einer elektrischen Spule (23) besteht, wobei die Spule (23) mit einer Tilgermasse (25, 26) fest verbunden ist, dadurch gekennzeichnet, daß das Entkopplungssystem (20) außerhalb der flüssigkeitsgefüllten Lagerräume (1, 2) auf der Karosserieseite des Lagers fest mit diesem verbunden ist.

2. Motorlager nach Anspruch 1, dadurch gekennzeichnet, daß das Entkopplungssystem (20) auf dem Boden eines die Ausgleichskammer (2) umschließenden Lagertopfes (10) angeordnet ist.

3. Motorlager nach Anspruch 2, dadurch gekennzeichnet, daß das Entkopplungssystem (20) einen ringförmigen, am Lagertopf (10) festgelegten Permanentmagneten (21) aufweist, der von einer elastischen Membran (24) mit einer zentralen Tilgermasse (26) überspannt und die elektrische Spule (23) an die Membran (24) angekoppelt ist.

4. Motorlager nach Anspruch 3, dadurch gekennzeichnet, daß die Tilgermasse (25) topfförmig ausgebildet und von der Spule (23) umschlossen ist.

5. Motorlager nach Anspruch 4, dadurch gekennzeichnet, daß das Gewicht der Tilgermasse (25, 26) etwa 5 bis 50 g beträgt.

6. Notorlager nach einem oder mehreren der Ansprüche 1 bis 5, dadurch gekennzeichnet, daß zur Ansteuerung des Entkopplungssystems (20) ein Sensor (27) vorgesehen ist, der auf der Karosserieseite (10) des Lagers angeordnet ist und bei über das Lager übertragenen Schwingungen oberhalb einer vorgesehenen Mindestfrequenz schwingungsproportionale, jedoch dazu phasenverschobene Signale an die Tilgerspule (23) abgibt.

7. Motorlager nach Anspruch 6, dadurch gekennzeichnet, daß der Sensor (27) aus einem seismischen System mit einer Masse und einer federbeaufschlagten Spule besteht und ein seiner Schwingbewegung angenähert proportionales Signal abgibt.

8. Motorlager nach Anspruch 3 und 7, dadurch gekennzeichnet, daß eine mechanische Phasenverschiebung von etwa 180° zwischen Sensorspule (27) und Tilgerspule (23) vorgesehen ist derart, daß die Masse der Sensorspule in Zugrichtung und die Masse der Tilgerspule in Druckrichtung - jeweils bezogen auf en Permanentmagneten - angeordnet ist.

## Claims

1. Active, hydraulically damping engine mounting, in particular for motor vehicles, having a working chamber (1) surrounded by a rubber-elastic peripheral wall (5) and a compensating chamber (2), which chambers are connected to one another via an overflow channel (4) in an intermediate plate (3), as well as having an isolating system (20) for high-frequency vibrations which in dependence upon preset operating parameters may be electrodynamically set into vibration and comprises a permanent magnet (21) and an electric coil (23), the coil (23) being firmly connected to a absorbing mass (25, 26), characterized in that the isolating system (20) is connected outside of the liquid-filled mounting chambers (1, 2) at the body end of the mounting firmly to said mounting.

2. Engine mounting according to claim 1, characterized in that the isolating system (20) is disposed on the bottom of a mounting cup (10) which encloses the compensating chamber (2).

3. Engine mounting according to claim 2, characterized in that the isolating system (20) has an annular permanent magnet (21), which is fixed on the mounting cup (10) and is spanned by an elastic diaphragm (24) with a central absorbing mass (26), and the electric coil (23) is coupled to the diaphragm (24).

4. Engine mounting according to claim 3, characterized in that the absorbing mass (25) is cup-shaped and is enclosed by the coil (23).

5. Engine mounting according to claim 4, characterized in that the weight of the absorbing mass (25, 26) is approximately 5 to 50 g.

6. Engine mounting according to one or more of claims 1 to 5, characterized in that there is provided, for activating the isolating system (20), a sensor (27) which is disposed at the body end (10) of the mounting and, in the event of vibrations above a preset minimum frequency being transmitted via the mounting, supplies to the absorbing coil (23) signals which are proportional to the vibrations but are phase-displaced relative thereto.

7. Engine mounting according to claim 6, characterized in that the sensor (27) comprises a seismic system with a mass and a spring-loaded coil and supplies a signal approximately proportional to its oscillatory motion.

8. Engine mounting according to claim 3 and 7, characterized in that a mechanical phase displacement of around 180° between sensor coil (27) and absorbing coil (23) is provided in such a way that the mass of the sensor coil is disposed in the direction of tension and the mass of the absorbing coil is disposed in the direction of compression - in each case relative to the permanent magnet.

## Revendications

1. Support de moteur actif et à amortissement hydraulique, notamment pour véhicule automobile, comprenant une chambre de travail (1) délimitée par une paroi périphérique (5) ayant l'élasticité du caoutchouc et une chambre de compensation (2), qui communiquent entre elles par un canal (4) de passage ménagé dans un plateau (3) intermédiaire, ainsi qu'un système de découplage (20) des oscillations de haute fréquence, qui peut être mis en oscillations électrodynamiquement en fonction de paramètres de fonctionnement prescrits, qui est constitué d'un aimant (21) permanent et d'une bobine (23) électrique, la bobine (23) étant reliée rigidement à une masselotte (25, 26) d'amortissement, caractérisé en ce que le système de découplage (20) est relié, à l'extérieur des chambres (1, 2) du support qui sont emplies de liquide, du côté de la carrosserie du support, rigidement à celui-ci.

2. Support de moteur suivant la revendication 1, caractérisé en ce que le système de découplage (20) est monté sur le fond d'une cuvette (10) entourant la chambre de compensation (2).

3. Support de moteur suivant la revendication 2, caractérisé en ce que le système de découplage (20) comporte un aimant (21) permanent annulaire, qui est fixé à la cuvette (10) et qui est recouvert d'une masselotte (26) centrale d'amortissement et la bobine (23) électrique est couplée à la membrane (24).

4. Support de moteur suivant la revendication 3, caractérisé en ce que la masselotte (25) d'amortissement est constituée sous la forme d'une cuvette et est entourée de la bobine (23).

5. Support de moteur suivant la revendication 4, caractérisé en ce que le poids de la masselotte (25, 26) d'amortissement est de 5 à 50 g environ.

6. Support de moteur suivant l'une ou plusieurs des revendications 1 à 5, caractérisé en ce que, pour commander le système de couplage, il est prévu un détecteur (27), qui est monté du côté (10) de la carrosserie du support et qui, dans le cas d'oscillations transmises par le support et supérieures à une fréquence minimale prévue, envoie à la bobine (23) d'amortissement des signaux proportionnels aux oscillations, mais déphasés par rapport à celle-ci.

7. Support de moteur suivant la revendication 6, caractérisé en ce que le détecteur (27) est constitué d'un système sismique ayant une masselotte et une bobine soumises à l'action d'un ressort et émet un signal sensiblement proportionnel à son mouvement d'oscillation.

8. Support de moteur suivant les revendications 3 et 7, caractérisé en ce qu'il est prévu un déphasage mécanique de 180° environ entre la bobine (27) du détecteur et la bobine (23) d'amortissement de manière que la masselotte de la bobine du détecteur se trouve dans le sens de la traction, et que la masselotte de la bobine d'amortissement se trouve dans le sens de la compression par rapport à l'aimant permanent.
